(19) **Europäisches Patentamt / European Patent Office / Office européen des brevets**

(11) **EP 3 879 340 B1**

(12) **EUROPEAN PATENT SPECIFICATION**

(45) Date of publication and mention
of the grant of the patent:
**18.03.2026 Bulletin 2026/12**

(21) Application number: **19881677.9**

(22) Date of filing: **27.09.2019**

(51) International Patent Classification (IPC):
**G03B 21/62** (2014.01)    **C09D 4/02** (2006.01)
**C09D 5/00** (2006.01)    **C09D 7/61** (2018.01)
**C09D 7/63** (2018.01)    **C09D 175/00** (2006.01)
**C09D 201/00** (2006.01)    **G02B 5/02** (2006.01)
**C08K 3/105** (2018.01)    **C08F 290/06** (2006.01)
**C08G 18/67** (2006.01)    **C08G 18/79** (2006.01)
**C08G 18/81** (2006.01)    **C08K 3/32** (2006.01)
**C09D 175/16** (2006.01)    **G03B 21/56** (2006.01)
**C08K 5/5425** (2006.01)

(52) Cooperative Patent Classification (CPC):
(C-Sets available)
**C08G 18/792; C08F 290/067; C08G 18/673;**
**C08G 18/8116; C09D 5/00; C09D 7/61;**
**C09D 175/16; G02B 5/0242; G03B 21/56;**
**G03B 21/62;** C08K 5/5425; C08K 2003/321;
C08K 2003/328 (Cont.)

(86) International application number:
**PCT/JP2019/038104**

(87) International publication number:
**WO 2020/095566 (14.05.2020 Gazette 2020/20)**

(54) **COATING MATERIAL FOR FORMATION OF LIGHT-DIFFUSING LAYER, FILM FOR PROJECTION SCREEN, AND PROJECTION SCREEN**

BESCHICHTUNGSMATERIAL ZUR BILDUNG EINER LICHTSTREUENDEN SCHICHT, FILM FÜR PROJEKTIONSSCHIRM UND PROJEKTIONSSCHIRM

MATÉRIAU DE REVÊTEMENT POUR FORMATION DE COUCHE DE DIFFUSION DE LUMIÈRE, FILM POUR ÉCRAN DE PROJECTION, ET ÉCRAN DE PROJECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2018 JP 2018208519**

(43) Date of publication of application:
**15.09.2021 Bulletin 2021/37**

(73) Proprietor: **Riken Technos Corporation**
**Tokyo 101-8336 (JP)**

(72) Inventor: **HASHIMOTO, Taketo**
**Tokyo 101-8336 (JP)**

(74) Representative: **J A Kemp LLP**
**80 Turnmill Street**
**London EC1M 5QU (GB)**

(56) References cited:
**EP-A1- 3 309 611**    **WO-A1-2018/025800**
**WO-A1-2018/025800**    **WO-A1-2018/147042**
**WO-A1-2018/147042**    **JP-A- 2001 172 627**
**JP-A- 2011 201 938**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/673, C08G 18/40;**
**C09D 175/16, C08K 3/32**

# EP 3 879 340 B1

**Description**

## TECHNICAL FIELD

The present invention relates to a coating material for formation of a light-diffusing layer, a film for projection screen, and a projection screen. More specifically, the present invention relates to a coating material that is used for formation of a light-diffusing layer of a projection screen, and a film for projection screen and a projection screen, each of which contains a light-diffusing layer formed by using the coating material.

## BACKGROUND ART

In recent years, it has been performed that a film for projection screen having transparency is bonded to glass windows or glazed shelves in commercial facilities such as a convenience store, a supermarket, a shopping center, and a department store, or a medium having transparent visibility such as a partition made of glass at an event venue, and a video content of a product, a service, news, and the like is projected for display on the film for projection screen when desired, while maintaining the transparent visibility for the routine use. For the film for projection screen for such use, it is required to have both contradictory properties of high transparent visibility (high transparency) and of clear showing of the image projected for display (high video display property). Further, it is required that an angle at which the image projected for display can be clearly seen (i.e. an angle at which the projection screen is viewed) is wide (i.e. a wide viewing angle), chromatic aberration is not generated in the image projected for display, the film itself for projection screen has no color tint, and the like. As the film for projection screen having transparency, there have been many proposals (see, for example, Patent Literatures 1 and 2). However, such techniques have not been sufficiently satisfactory as the film for projection screen for intended use as described above.

WO 2018/147042 describes a light scattering sheet constituted of a molded resin body in which light scattering particles are distributed in a resin. The light scattering particles are particles of a phosphate of a rare earth element. The surface area of the light scattering particles per unit volume of the molded resin body is not greater than 0.600 $m^2/cm^3$. Preferably, the cumulative-volume particle diameter $D_{50}$ of the light scattering particles with a cumulative volume of 50 vol%, obtained by using the laser diffraction/scattering particle-size-distribution measurement method, is 0.1-20 $\mu$m. Also preferably, the value of $D_{99}/D_{50}$, which is the ratio of $D_{99}$ to $D_{50}$ of the light scattering particles, where $D_{99}$ signifies the cumulative-volume particle diameter with a cumulative volume of 99 vol%, obtained by using the laser diffraction/scattering particle-size-distribution measurement method, is not greater than 10.

EP-A-3309611 describes a transparent screen which satisfies both the visibility of the projection light and the transmission light by anisotropically scattering and reflecting the projection light emitted from a light source. The transparent screen comprises a light diffusion layer including a binder and microparticles, said transparent screen having a scattered light brilliance profile characterized to meet the following conditions A to C; A: the emitted light relative brilliance in the 0° direction is from 50 to 95, when the entered light relative brilliance is 100; B: the emitted light relative brilliance in the ±5° direction is 1.1 or less, when the emitted light relative brilliance in the 0° direction is 100; and C: the emitted light relative brilliance in the ±50° direction is 0.0005 or higher, when the emitted light relative brilliance in the 0° direction is 100; when the brilliance is Y from the XYZ color system measured with a goniophotometer.

## CITATION LIST

### PATENT LITERATURE

> PATENT LITERATURE 1: JP-A-2015-212800
> PATENT LITERATURE 2: JP-A-2017-215355
> PATENT LITERATURE 3: WO 2018/025800
> PATENT LITERATURE 4: JP-A-2014-201495

## SUMMARY OF INVENTION

### TECHNICAL PROBLEM

An object of the present invention is to provide a coating material for formation of a light-diffusing layer of a projection screen, which can be used to obtain a projection screen having an excellent balance between the high transparency and the high video display property (objectively indicated by the level of "diffusivity" described later); and a film for projection screen and a projection screen each of which contains a light-diffusing layer formed by using the coating material;.

A further object of the present invention is to provide a coating material for formation of a light-diffusing layer of a projection screen, with which a projection screen having an excellent balance between the high transparency and the high video display property, having a wide viewing angle, hardly generating chromatic aberration (having sufficiently small chromatic aberration), and having no color tint (white but transparent) can be obtained; a film for projection screen and a projection screen, each of which contains a light-diffusing layer formed by using the coating material.

SOLUTION TO PROBLEM

As a result of intensive studies, the present inventors have found that the objects described above can be achieved by a specific coating material.

That is, the present invention provides a coating material for formation of a light-diffusing layer of a projection screen, comprising: 100 parts by mass of a polyfunctional (meth)acrylate (A); and 0.1 to 50 parts by mass of fine rare-earth phosphate particles (B).

The present invention also provides a film for projection screen, comprising a light-diffusing layer formed by using the coating material according to the invention.

The present invention also provides a projection screen, comprising the film for projection screen according to the invention.

The present invention also provides a projection screen, comprising a light-diffusing layer formed by using the coating material according to the invention.

The present invention also provides a method for producing a film for projection screen, the method comprising the steps of:

(1) mixing and stirring 100 parts by mass of fine rare-earth phosphate particles (B), 1 to 30 parts by mass of a silane-coupling agent (C), and 500 to 2000 parts by mass of a solvent (E) thereby obtaining a first mixture;
(2) further adding a compound (D) having an isocyanate group and a polymerizable functional group excluding an isocyanate group into the first mixture obtained in the step (1) so that the compound (D) is in an amount of 1 to 30 parts by mass with respect to 100 parts by mass of the (B) fine rare-earth phosphate particles, and performing mixing and stirring of the mixture of the compound (D) and the first mixture thereby obtaining a second mixture;
(3) further adding a polyfunctional (meth)acrylate (A) into the second mixture obtained in the step (2), and performing mixing and stirring of the mixture of the (A) polyfunctional (meth)acrylate and the second mixture thereby obtaining a coating material containing 100 parts by mass of the (A) polyfunctional (meth)acrylate and 0.1 to 50 parts by mass of the (B) fine rare-earth phosphate particles; and
(4) forming a light-diffusing layer on at least one side of a film substrate by using the coating material obtained in the step (3).

Further aspects of the present invention are set out in the appended set of claims.

ADVANTAGEOUS EFFECTS OF INVENTION

A film for projection screen, which contains a light-diffusing layer formed by using the coating material according to the present invention, has an excellent balance between the high transparency and the high video display property. The film for projection screen, which contains a light-diffusing layer formed by using a preferable coating material according to the present invention has an excellent balance between the high transparency and the high video display property, has a wide viewing angle, hardly generates chromatic aberration (has sufficiently small chromatic aberration), and has no color tint (white but transparent). Accordingly, such a film can be suitably used as a film for projection screen. In particular, the film is a film for projection screen, which is used by being bonded to a medium having transparent visibility such as a glass window, and can be suitably used as a film for projection screen on which a video content is projected for display when desired, while maintaining the transparent visibility for the routine use.

The projection screen containing a light-diffusing layer formed by using the coating material according to the present invention has an excellent balance between the high transparency and the high video display property. The projection screen containing a light-diffusing layer formed by using a preferable coating material according to the present invention has an excellent balance between the high transparency and the high video display property, has a wide viewing angle, hardly generates chromatic aberration (has sufficiently small chromatic aberration), and has no color tint (white but transparent). In particular, the projection screen containing a light-diffusing layer formed by using such a specific coating material can be suitably used as a projection screen on which a video content is projected for display when desired, while maintaining the transparent visibility for the routine use.

BRIEF DESCRIPTION OF DRAWINGS

FIG. 1 is a gel permeation chromatography (GPC) curve of the component (A1-1) used in Examples to be described later.

FIG. 2 is a conceptual diagram of a cross section showing one example of an embodiment of the film for projection screen according to the present invention.

FIG. 3 is a conceptual diagram of a cross section showing one example of another embodiment of the film for projection screen according to the present invention.

FIG. 4 is a conceptual diagram of a cross section showing one example of another embodiment of the film for projection screen according to the present invention.

DESCRIPTION OF EMBODIMENTS

In the present specification, the term "resin" is used as a term including a resin mixture containing two or more kinds of resins, and a resin composition containing a component other than a resin. In the present specification, the term "film" is used interchangeably or intersubstitutably with "sheet". In the present specification, the terms "film" and "sheet" are used for ones that can be industrially taken up in a roll form. The terms "plate" is used for one that cannot be industrially taken up in a roll form. Further, in the present specification, the expression "laminating one layer on another in order" includes both of "laminating such layers directly" and "laminating such layers by interposing other layer(s) such as an anchor coat therebetween".

In the present specification, the term "or more" relating to a numerical range is used to mean a certain numerical value or a value exceeding the certain numerical value. For example, 20% or more means 20% or exceeding 20%. The term "or less" relating to a numerical range is used to mean a certain numerical value or a value less than the certain numerical value. For example, 20% or less means 20% or less than 20%. Further, the term "to" relating to a numerical range is used to mean "a" certain numerical value, a value exceeding the certain numerical value and less than another certain numerical value, or the other certain numerical value. In this regard, the other certain numerical value is larger than the "a" certain numerical value. For example, 10 to 90% means 10%, exceeding 10% and less than 90%, or 90%.

In addition, the upper and lower limits of the numerical range can be arbitrarily combined, and the arbitrary combination can be read in an embodiment. For example, from the expression "usually 10% or more and preferably 20% or more, and in addition, usually 40% or less and preferably 30% or less" or the expression "usually 10 to 40% and preferably 20 to 30%" relating to a numerical range of a certain property, it can be read that the numerical range of the certain property is 10 to 40%, 20 to 30%, 10 to 30%, or 20 to 40% in one embodiment.

Except in Examples, or unless otherwise specified, all of the numerical values used in the present specification and scope of claims should be understood as being modified by the term "about". Without attempting to limit the application of the doctrine of equivalents to the scope of claims, each numerical value should be interpreted in the light of significant digits and by applying an ordinary rounding technique.

1. Coating material for formation of light-diffusing layer

The coating material according to the present invention contains a base resin (A) which is a polyfunctional (meth) acrylate, and fine rare-earth phosphate particles (B). The coating material according to the present invention further contains a silane-coupling agent (C) in addition to components (A) and (B) in one preferred embodiment. The coating material according to the present invention further contains a compound (D) having an isocyanate group and a polymerizable functional group excluding an isocyanate group in addition to components (A) and (B) in one preferred embodiment. The coating material according to the present invention contains a polyfunctional (meth)acrylate (A), fine rare-earth phosphate particles (B), a silane-coupling agent (C), and a compound (D) having an isocyanate group and a polymerizable functional group excluding an isocyanate group in one of the more preferable embodiments. Hereinafter, each component will be described.

Polyfunctional (meth)acrylate (A)

Component (A) that is a polyfunctional (meth)acrylate includes component (B) that is fine rare-earth phosphate particles, and functions to form a coat.

A polyfunctional (meth)acrylate is used as component (A) from the viewpoint of favorably dispersing component (B) in component (A), from the viewpoint of making the thickness of a light-diffusing layer uniform and expressing the video display property uniformly, and from the viewpoint of enabling the suppression of the impairment of uniformity of the video display property due to the changes in the thickness of a light-diffusing layer even if the projection screen receives physical impact.

The polyfunctional (meth)acrylate can form a coat by being polymerized and cured with active energy rays such as UV rays or electron beams.

In the present specification, (meth)acrylate means acrylate or methacrylate.

Examples of the polyfunctional (meth)acrylate include a (meth)acryloyl group-containing bifunctional reactive monomer such as diethylene glycol di(meth)acrylate, neopentyl glycol di(meth)acrylate, 1,6-hexanediol di(meth)acrylate, polyethylene glycol di(meth)acrylate, 2,2'-bis(4-(meth)acryloyloxypolyethyleneoxyphenyl)propane, or 2,2'-bis(4-(meth) acryloyloxypolypropyleneoxyphenyl)propane; a (meth)acryloyl group-containing trifunctional reactive monomer such as trimethylolpropane tri(meth)acrylate, trimethylolethane tri(meth)acrylate, or ethoxylated trimethylolpropane tri(meth) acrylate; a (meth)acryloyl group-containing tetrafunctional reactive monomer such as ditrimethylol propane tetra(meth)acrylate, or pentaerythritol tetramethacrylate; a (meth)acryloyl group-containing hexafunctional reactive monomer such as dipentaerythritol hexaacrylate; and a (meth)acryloyl group-containing octafunctional reactive monomer such as tripentaerythritol octaacrylate.

Examples of the polyfunctional (meth)acrylate also include polyfunctional poly(meth)acrylates such as prepolymers or oligomers of polyurethane (meth)acrylate, polyester (meth)acrylate, polyacryl (meth)acrylate, polyepoxy (meth)acrylate, polyalkylene glycol poly(meth)acrylate, and polyether (meth)acrylate, which are ones having two or more (meth)acryloyl groups in one molecule.

As the polyfunctional (meth)acrylate, one kind of or a mixture of two or more kinds of them can be used.

From the viewpoint of obtaining a more excellent balance between the high transparency and the high video display property of a light-diffusing layer (hereinafter, may be just referred to as "coat") formed of a coating material, a polyfunctional poly(meth)acrylate is preferable.

Polyfunctional poly(meth)acrylate (A1)

Component (A1) that is a polyfunctional poly(meth)acrylate is an oligomer or prepolymer having two or more (meth)acryloyl groups in one molecule. In the present specification, the (meth)acryloyl group means an acryloyl group or a methacryloyl group. Since component (A1) has two or more (meth)acryloyl groups in one molecule, it functions to form a coat by being polymerized and cured with active energy rays such as UV rays or electron beams.

Examples of component (A1) include prepolymers or oligomers of polyurethane (meth)acrylate, polyester (meth) acrylate, polyacryl (meth)acrylate, polyepoxy (meth)acrylate, polyalkylene glycol poly(meth)acrylate, and polyether (meth)acrylate, which are ones having two or more (meth)acryloyl groups in one molecule. Among them, from the viewpoint of the surface hardness and appearance of a coat, a polyurethane (meth)acrylate having two or more (meth) acryloyl groups in one molecule is preferable.

The polyurethane (meth)acrylate having two or more (meth)acryloyl groups in one molecule is a compound having a urethane structure (-NH-CO-O-) or a derivative thereof, which has two or more (meth)acryloyl groups in one molecule.

The polyurethane (meth)acrylate having two or more (meth)acryloyl groups in one molecule is not particularly limited, but may be typically one produced by using a compound having two or more isocyanate groups (-N=C=O) in one molecule, a polyol compound, and a hydroxyl group-containing (meth)acrylate, that is, one containing constituent units derived from these compounds.

Examples of the compound having two or more isocyanate groups in one molecule include compounds having two isocyanate groups in one molecule such as diphenylmethane diisocyanate, hexamethylene diisocyanate, isophorone diisocyanate, tolylene diisocyanate, and methylenebis(4-cyclohexylisocyanate). Examples of the compound having two or more isocyanate groups in one molecule include polyisocyanates such as a trimethylolpropane adduct of tolylene diisocyanate, a trimethylolpropane adduct of hexamethylene diisocyanate, a trimethylolpropane adduct of isophorone diisocyanate, an isocyanurate of tolylene diisocyanate, an isocyanurate of hexamethylene diisocyanate, an isocyanurate of isophorone diisocyanate, and a biuret of hexamethylene diisocyanate. As the compound having two or more isocyanate groups in one molecule, one kind of or a mixture of two or more kinds of the above compounds can be used.

Examples of the polyol compound include a polyether polyol, a polyester polyol, and a polycarbonate polyol.

Examples of the polyether polyol include a polyalkylene glycol such as polyethylene glycol, polypropylene glycol, or polytetramethylene glycol; a polyalkylene oxide such as polyethylene oxide, or polypropylene oxide; a copolymer of ethylene oxide and propylene oxide; a copolymer of ethylene oxide and tetrahydrofuran; a copolymer of a divalent phenol compound and polyoxyalkylene glycol; and a copolymer of divalent phenol and one or more kinds of alkylene oxides having 2 to 4 carbon atoms (for example, ethylene oxide, propylene oxide, 1,2-butylene oxide, and 1,4-butylene oxide).

Examples of the polyester polyol include poly(ethylene adipate), poly(butylene adipate), poly(neopentyl adipate), poly(hexamethylene adipate), poly(butylene azelaate), poly(butylene sebacate), and polycaprolactone.

Examples of the polycarbonate polyol include poly(butanediol carbonate), poly(hexanediol carbonate), and poly(nonanediol carbonate).

As the polyol compound, one kind of or a mixture of two or more kinds of them can be used.

Examples of the hydroxyl group-containing (meth)acrylate include a hydroxyalkyl (meth)acrylate such as 2-hydroxyethyl (meth)acrylate, 2-hydroxypropyl (meth)acrylate, 2-hydroxybutyl (meth)acrylate, 4-hydroxybutyl (meth)acrylate, 6-hydroxyhexyl (meth)acrylate, or 2-hydroxy-3-(meth)acryloyloxypropyl (meth)acrylate; a glycol-based (meth)acrylate such as dipropylene glycol (meth)acrylate, polyethylene glycol mono(meth)acrylate, or polypropylene glycol mono(meth)acrylate; a glycerin-based (meth)acrylate such as glycerin di(meth)acrylate; a glycidyl-based (meth)acrylate such as a fatty acid modified-glycidyl (meth)acrylate; a phosphorus atom-containing (meth)acrylate such as 2-hydroxyethyl acryloyl phosphate; a (meth)acrylic acid adduct of an ester or an ester derivative, such as 2-(meth)acryloyloxyethyl-2-hydroxypropyl phthalate; a pentaerythritol-based (meth)acrylate such as pentaerythritol tri(meth)acrylate, dipentaerythritol penta(meth)acrylate, ethylene oxide-modified pentaerythritol tri(meth)acrylate, or ethylene oxide-modified dipentaerythritol penta(meth)acrylate; and a caprolactone-modified (meth)acrylate such as caprolactone-modified 2-hydroxyethyl (meth)acrylate, caprolactone-modified pentaerythritol tri(meth)acrylate, or caprolactone-modified dipentaerythritol penta(meth)acrylate. As the hydroxyl group-containing (meth)acrylate, one kind of or a mixture of two or more kinds of them can be used.

As component (A1) that is a polyfunctional poly(meth)acrylate, one kind of or a mixture of two or more kinds of them can be used.

The mass average molecular weight (Mw) of component (A1) that is a polyfunctional poly(meth)acrylate in terms of polystyrene calculated from a differential molecular weight distribution curve (hereinafter, may be abbreviated as "GPC curve") measured by gel permeation chromatography (hereinafter, may be abbreviated as "GPC") may be, from the viewpoint of favorably dispersing component (B) and making the surface appearance of a coat to be formed favorable, preferably 1000 or more, more preferably 2000 or more, furthermore preferably 3000 or more, and most preferably 4000 or more. In addition, the mass average molecular weight (Mw) may be, from the viewpoint of the coatability of a coating material containing component (A1), preferably 100000 or less, more preferably 70000 or less, and furthermore preferably 50000 or less.

The Z average molecular weight (Mz) in terms of polystyrene calculated from the GPC curve of component (A1) that is a polyfunctional poly(meth)acrylate may be, from the viewpoint of favorably dispersing component (B) and making the surface appearance of a coat to be formed favorable, preferably 2000 or more, more preferably 4000 or more, furthermore preferably 6000 or more, and most preferably 8000 or more. In addition, the Z average molecular weight (Mz) may be, from the viewpoint of the coatability of a coating material containing component (A1), preferably 200000 or less, more preferably 150000 or less, and furthermore preferably 120000 or less.

The GPC can be measured by using as the system, a high performance liquid chromatography system, "HLC-8320" (trade name) available from Tosoh Corporation (system including a degasser, a liquid transfer pump, an autosampler, a column oven, and a RI (differential refractive index) detector); by using as the GPC column, four columns in total, of which two columns are GPC columns "KF-806L" (trade name) available from Shodex Co., Ltd., one column is "KF-802" (trade name) available from Shodex Co., Ltd., and one column is "KF-801" (trade name) available from Shodex Co., Ltd., which are connected in the order of KF-806L, KF-806L, KF-802, and KF-801 from the upstream side; and by using tetrahydrofuran (containing no stabilizer) for high performance liquid chromatography available from Wako Pure Chemical Industries, Ltd. as the mobile phase, under conditions of a flow rate of 1.0 ml/min, a column temperature of 40°C, a sample concentration of 1 mg/ml, and an amount of the sample to be injected of 100 microliters. The elution amount in each retention volume can be determined from a detection amount of a RI detector, assuming that the refractive index of a measurement sample does not depend on the molecular weight. Further, the calibration curve from the retention volume to the molecular weight in terms of polystyrene can be created by using a standard polystyrene, "EasiCal PS-1" (trade name, Plain A having a molecular weight of 6375000, 573000, 117000, 31500, or 3480; or Plain B having a molecular weight of 2517000, 270600, 71800, 10750, or 705) available from Agilent Technologies, Inc. As the analysis program, "TOSOH HLC-8320GPC EcoSEC" (trade name) available from Tosoh Corporation can be used. In this regard, for the theory and practice of measurement of GPC, a reference book such as "Size Exclusion Chromatography: High Performance Liquid Chromatography of Polymers, Author: Sadao Mori, First edition, First printing, December 10, 1991" published by KYORITSU SHUPPAN CO., LTD. can be made reference to.

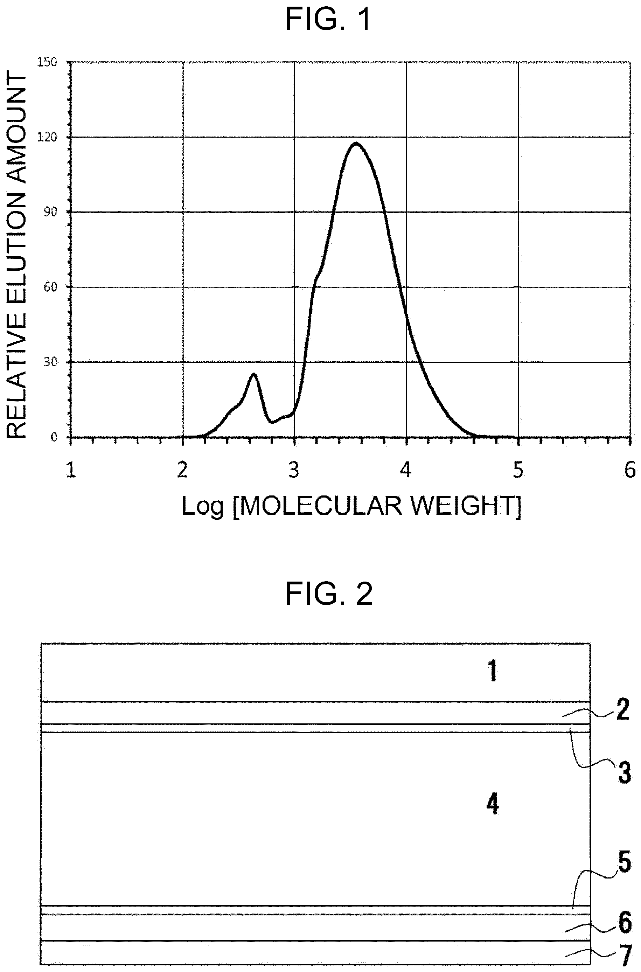

A differential molecular weight distribution curve of the component (A1-1) used in Examples to be described later is shown in FIG. 1. The peak top of the main component and the peak top of the sub-component are observed, and the molecular weights in terms of polystyrene at the peak top positions are 3600 and 430, respectively. The molecular weight in terms of polystyrene of the component on the highest side of the molecular weight is recognized as 39800. Further, the entire number average molecular weight, mass average molecular weight, and Z average molecular weight are 2000, 4800, and 9600, respectively in terms of polystyrene.

The number of (meth)acryloyl groups in one molecule of component (A1) that is polyfunctional poly(meth)acrylate may be, from the viewpoint of improving the surface hardness and abrasion resistance of a coat, preferably 3 or more, more preferably 4 or more, and furthermore preferably 5 or more. In addition, this number may be usually 30 or less, and preferably 20 or less, from the viewpoint of the crack resistance.

Fine rare-earth phosphate particles (B)

Component (B) that is fine rare-earth phosphate particles is fine particles of phosphate of rare earths (scandium, yttrium, and lanthanoid (lanthanum, cerium, praseodymium, neodymium, promethium, samarium, europium, gadolinium, terbium, dysprosium, holmium, erbium, thulium, ytterbium, and lutetium)). Component (B) that is fine rare-earth phosphate particles scatters the light incident on a light-diffusing layer of a projection screen, and functions to enable a video content to be clearly projected for display.

While not intending to be bound by theory, it is considered that since component (B) that is fine rare-earth phosphate particles has a high refractive index and a high Abbe number, and further, the refractive index has small wavelength dependence, a projection screen having a wide viewing angle and hardly generating chromatic aberration (having sufficiently small chromatic aberration) can be obtained. In addition, it is considered that since component (B) that is fine rare-earth phosphate particles is white but transparent, a projection screen having no color tint can be obtained.

The average particle diameter of component (B) that is fine rare-earth phosphate particles may be, from the viewpoint of retaining the transparency of a coat, usually 20 $\mu$m or less, preferably 10 $\mu$m or less, more preferably 6 $\mu$m or less, furthermore preferably 3 $\mu$m or less, and most preferably 1 $\mu$m or less. On the other hand, the average particle diameter may be, from the viewpoint of enabling a video content to be clearly projected for display, preferably 0.01 $\mu$m or more, more preferably 0.05 $\mu$m or more, and furthermore preferably 0.08 $\mu$m or more.

In the present specification, in the particle size distribution curve measured by a laser diffraction scattering method, the average particle diameter of particles is a particle diameter with which the cumulative mass of particles from the smaller particles is 50% by mass. The particle size distribution curve can be measured, for example, by using a laser diffraction/scattering particle size analyzer, "MT3200II" (trade name) available from NIKKISO CO., LTD.

As component (B) that is fine rare-earth phosphate particles, for example, ones disclosed in Patent Literatures 3 and 4 can be preferably used.

As component (B) that is fine rare-earth phosphate particles, one kind of or a mixture of two or more kinds of them can be used.

The amount of component (B) that is fine rare-earth phosphate particles is, from the viewpoint of enabling a video content to be clearly projected for display, 0.1 part by mass or more, preferably 0.5 parts by mass or more, more preferably 1 part by mass or more, furthermore preferably 2 parts by mass or more, and most preferably 3 parts by mass or more, with respect to 100 parts by mass of component (A) that is a polyfunctional (meth)acrylate. In addition, the amount is, from the viewpoint of retaining the transparency of a coat, 50 parts by mass or less, preferably 40 parts by mass or less, more preferably 30 parts by mass or less, furthermore preferably 25 parts by mass or less, still more preferably 20 parts by mass or less, and most preferably 15 parts by mass or less.

Silane-coupling agent (C)

Component (C) that is a silane-coupling agent is a silane compound having at least two different kinds of reactive groups of a hydrolyzable group (for example, an alkoxy group such as a methoxy group, or an ethoxy group; an acyloxy group such as an acetoxy group; and a halogen group such as a chloro group), and an organic functional group (for example, a vinyl group, an epoxy group, a methacryloxy group, an acryloxy group, an amino group, a mercapto group, an isocyanate group, a ureido group, and an isocyanurate group). Component (C) that is a silane-coupling agent functions to improve the miscibility of component (A) that is a polyfunctional (meth)acrylate and component (B) that is fine rare-earth phosphate particles (eventually to improve the surface appearance and resistance to moisture and heat of a coat).

While not intending to be bound by theory, it is considered that the reason why component (C) that is a silane-coupling agent can improve the miscibility of component (A) and component (B) is because component (C) can form a chemical bond with or strongly interact with component (B) because of having a hydrolyzable group, and further, component (C) can form a chemical bond with or strongly interact with component (A) because of having an organic functional group.

Examples of component (C) that is a silane-coupling agent include a silane-coupling agent having a vinyl group (silane compound having a vinyl group and a hydrolyzable group), a silane-coupling agent having an epoxy group (silane compound having an epoxy group and a hydrolyzable group), a silane-coupling agent having a (meth)acryloxy group (methacryloxy group or acryloxy group) (silane compound having a (meth)acryloxy group and a hydrolyzable group), a silane-coupling agent having an amino group (silane compound having an amino group and a hydrolyzable group), a silane-coupling agent having a mercapto group (silane compound having a mercapto group and a hydrolyzable group), a silane-coupling agent having an isocyanate group (silane compound having an isocyanate group and a hydrolyzable group), a silane-coupling agent having a ureido group (silane compound having a ureido group and a hydrolyzable group), and a silane-coupling agent having an isocyanurate group (silane compound having an isocyanurate group and a hydrolyzable group).

Examples of the silane-coupling agent having a vinyl group include vinyltrimethoxysilane, vinyltriethoxysilane, and p-styryltrimethoxysilane.

Examples of the silane-coupling agent having an epoxy group include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane.

Examples of the silane-coupling agent having a (meth)acryloxy group include 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane.

Examples of the silane-coupling agent having an amino group include N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the silane-coupling agent having a mercapto group include 3-mercaptopropylmethyldimethoxysilane, and 3-mercaptopropyltrimethoxysilane.

An example of the silane-coupling agent having an isocyanate group includes 3-isocyanatepropyltriethoxysilane.

Examples of the silane-coupling agent having a ureido group include 3-ureidopropyltrimethoxysilane, and 3-ureidopropyltriethoxysilane.

An example of the silane-coupling agent having an isocyanurate group includes tris-(trimethoxysilylpropyl) isocyanurate.

As component (C) that is a silane-coupling agent, one kind of or a mixture of two or more kinds of them can be used.

The amount of component (C) that is a silane-coupling agent may be, from the viewpoint of reliably obtaining an effect of improving the miscibility of component (A) and component (B), usually 1 part by mass or more, preferably 4 parts by mass or more, and more preferably 7 parts by mass or more, with respect to 100 parts by mass of component (B) that is fine rare-earth phosphate particles. On the other hand, the amount may be, from the viewpoints of the curability of a coat and the transparency, usually 30 parts by mass or less, preferably 20 parts by mass or less, and more preferably 15 parts by mass or less.

In producing the coating material according to the present invention, it is preferable to mix and stir component (B) and component (C), and then to add component (A) to the mixture of components (B) and (C), and further to mix and stir the mixture of components (B), (C), and (A). In this procedure, the effect of improving the miscibility of component (A) and component (B), due to component (C), can be reliably obtained.

Compound (D) having isocyanate group and polymerizable functional group excluding isocyanate group

Component (D) that is a compound having an isocyanate group and a polymerizable functional group excluding an isocyanate group is a compound having one or more isocyanate groups (-N=C=O) and further one or more polymerizable functional groups excluding an isocyanate groups in one molecule. This compound may be hereinafter referred to as an "isocyanate group/non-isocyanate group-containing compound".

A compound having an isocyanate group, which is a polyfunctional (meth)acrylate or a polyfunctional poly(meth) acrylate, is classified into component (D) instead of component (A).

Component (D) that is an isocyanate group/non-isocyanate group-containing compound functions to improve the miscibility of component (A) and component (B) (eventually to improve the surface appearance and resistance to moisture and heat of a coat).

Examples of the polymerizable functional group excluding an isocyanate group of component (D) that is an isocyanate group/non-isocyanate group-containing compound include a (meth)acryloyl group, a vinyl group, an epoxy group, an amino group, and a mercapto group. Among them, a (meth)acryloyl group, and a vinyl group are preferable.

The number of isocyanate groups of component (D) that is an isocyanate group/non-isocyanate group-containing compound may be preferably 1 to 3, and more preferably 1. The number of polymerizable functional groups excluding an isocyanate group of component (D) may be preferably 1 to 3, and more preferably 1 to 2.

Examples of component (D) that is an isocyanate group/non-isocyanate group-containing compound include a compound having one isocyanate group and one polymerizable functional group excluding an isocyanate group in one molecule, such as 2-isocyanatoethyl (meth)acrylate; and a compound having one isocyanate group and two polymerizable functional groups excluding an isocyanate group in one molecule, such as 1,1-(bis(meth)acryloyloxymethyl)ethyl isocyanate.

As component (D) that is an isocyanate group/non-isocyanate group-containing compound, one kind of or a mixture of two or more kinds of them can be used.

The amount of component (D) that is an isocyanate group/non-isocyanate group-containing compound may be, from the viewpoint of reliably obtaining an effect of improving the miscibility of component (A) and component (B), usually 1 part by mass or more, preferably 4 parts by mass or more, and more preferably 7 parts by mass or more, with respect to 100 parts by mass of component (B) that is fine rare-earth phosphate particles. On the other hand, the amount may be, from the viewpoint of the curability of a coat, usually 30 parts by mass or less, preferably 20 parts by mass or less, and more preferably 15 parts by mass or less.

In producing the coating material according to the present invention, it is preferable to mix and stir component (B) and component (D), and then to add component (A) to the mixture of components (B) and (D), and further to mix and stir the mixture of components (B), (D), and (A). In this procedure, the effect of improving the miscibility of component (A) and component (B), due to component (D), can be reliably obtained.

It is preferable to use component (C) that is a silane-coupling agent and component (D) that is an isocyanate group/non-isocyanate group-containing compound in combination. In a case of this embodiment, in producing the coating material according to the present invention, it is preferable to mix and stir component (B) and component (C), and then to add component (D) to the mixture of components (B) and (C), to mix and stir the mixture of components (B), (C), and (D), and further to add component (A) to the mixture of components (B), (C), and (D), and to mix and stir the mixture of components (B), (C), (D), and (A). In this procedure, the effect of improving the miscibility of component (A) and component (B), due to the combination of component (C) with component (D), can be reliably obtained.

While not intending to be bound by theory, the above-described effect of improving the miscibility is considered as follows. If hydrolyzable groups (hereinafter, referred to as "free hydrolyzable groups") of component (C), which are not involved in the chemical bond with or strong interaction with component (B), form a chemical bond with or strongly interact with each other (between free hydrolyzable groups), component (B) may aggregate, and the dispersibility may be lowered. Since component (D) has an isocyanate group, this phenomenon can be prevented by forming a chemical bond with or strongly interacting with the free hydrolyzable group. Further, since component (D) can form a chemical bond with or strongly interact with component (A) because of having a polymerizable functional group, component (D) alone also can contribute to the improvement of the miscibility of component (A) and component (B). In addition, the reason why it is preferable to mix and stir component (C) with component (B) before mixing component (D) is because the hydrolyzable group is more advantageous than the isocyanate group is, in view of the chemical bond with or strong interaction with component (B).

From the viewpoint of making the curability with active energy rays favorable, it is preferable that the coating material according to the present invention further contains a compound having two or more isocyanate groups (-N=C=O) in one molecule and/or a photopolymerization initiator.

Examples of the compound having two or more isocyanate groups in one molecule include methylenebis-4-cyclohexylisocyanate; a polyisocyanate such as a trimethylolpropane adduct of tolylene diisocyanate, a trimethylolpropane adduct of hexamethylene diisocyanate, a trimethylolpropane adduct of isophorone diisocyanate, an isocyanurate of tolylene diisocyanate, an isocyanurate of hexamethylene diisocyanate, an isocyanurate of isophorone diisocyanate, or a biuret of hexamethylene diisocyanate; and a urethane crosslinking agent such as a blocked-type isocyanate of the polyisocyanate. As the compound having two or more isocyanate groups in one molecule, one kind of or a mixture of two or more kinds of the above compounds can be used. Further, in the crosslinking, a catalyst such as dibutyltin dilaurate, or dibutyltin diethylhexoate may be added, as needed.

Examples of the photopolymerization initiator include a benzophenone-based compound such as benzophenone, methyl-o-benzoylbenzoate, 4-methylbenzophenone, 4,4'-bis(diethylamino)benzophenone, o-benzoyl methyl benzoate, 4-phenylbenzophenone, 4-benzoyl-4'-methyl diphenyl sulfide, 3,3',4,4'-tetra(tert-butylperoxycarbonyl)benzophenone, or 2,4,6-trimethylbenzophenone; a benzoin-based compound such as benzoin, benzoin methyl ether, benzoin ethyl ether, benzoin isopropyl ether, or benzyl methyl ketal; an acetophenone-based compound such as acetophenone, 2,2-dimethoxy-2-phenylacetophenone, or 1-hydroxycyclohexyl phenyl ketone; an anthraquinone-based compound such as methyl anthraquinone, 2-ethylanthraquinone, or 2-amylanthraquinone; a thioxanthone-based compound such as thioxanthone, 2,4-diethylthioxanthone, or 2,4-diisopropylthioxanthone; an alkylphenone-based compound such as acetophenone dimethyl ketal; a triazine-based compound; a biimidazole compound; an acylphosphine oxide-based compound; a titanocene-based compound; an oxime ester-based compound; an oxime phenylacetic acid ester-based compound; a hydroxyketone-based compound; and an aminobenzoate-based compound. As the photopolymerization initiator, one kind of or a mixture of two or more kinds of them can be used.

It is preferable as the photopolymerization initiator to use two or more kinds of acetophenone-based photopolymerization initiators, for example, to use 1-hydroxy-cyclohexyl-phenylketone and 2-hydroxy-1-{4-[4-(2-hydroxy-2-methyl-propionyl)-benzyl]phenyl}-2-methylpropane-1-one in combination. These photopolymerization initiators can be used to perform the curing sufficiently while suppressing the coloring of a coat.

From the viewpoint of making the surface of a light-diffusing layer smooth, it is preferable that the coating material according to the present invention further contains a leveling agent.

Examples of the leveling agent include an acrylic leveling agent, a silicon-based leveling agent, a fluorine-based leveling agent, a silicone-acrylic copolymer-based leveling agent, a fluorine-modified acrylic leveling agent, a fluorine-modified silicon-based leveling agent, and a leveling agent in which a functional group (for example, an alkoxy group such as a methoxy group, or an ethoxy group, an acyloxy group, a halogen group, an amino group, a vinyl group, an epoxy group, a methacryloxy group, an acryloxy group, or an isocyanate group) has been introduced into the above-mentioned agent. Among them, as the leveling agent, a silicone-acrylic copolymer-based leveling agent is preferable. As the leveling agent, one kind of or a mixture of two or more kinds of them can be used.

The amount of the leveling agent is not particularly limited because the leveling agent is an optional component. The amount of the leveling agent may be, from the viewpoint of reliably obtaining the effect of using the leveling agent, usually 0.01 part by mass or more, preferably 0.05 parts by mass or more, and more preferably 0.1 part by mass or more, with respect to 100 parts by mass of component (A) that is a polyfunctional (meth)acrylate. On the other hand, the amount of the leveling agent may be, from the viewpoint of suppressing the troubles caused by bleeding out, usually 3 parts by mass or less, preferably 2 parts by mass or less, more preferably 1 part by mass or less, and furthermore preferably 0.5 parts by mass or less.

The coating material according to the present invention may contain, as desired, one kind or two or more kinds of optional components such as inorganic particles other than component (B), an antistatic agent, a surfactant, a leveling agent, a thixotropy-imparting agent, a fouling inhibitor, a printability-improving agent, an antioxidant, a weather-resistant stabilizer, a light-resistant stabilizer, a UV absorber, a thermal stabilizer, organic particles, an organic coloring agent, and an inorganic coloring agent.

For the purpose of dilution of the coating material according to the present invention to a concentration at which the coating can be easily performed, the coating material may contain a solvent as desired. The solvent is not particularly limited as long as it does not react with component (A), component (B), or other optional components, or does not catalyze (promote) the self-reaction (including deterioration reaction) of these components. Examples of the solvent include 1-methoxy-2-propanol, 2-propanol, ethanol, ethyl acetate, n-butyl acetate, toluene, methyl ethyl ketone, methyl isobutyl ketone, diacetone alcohol, and acetone. Among them, from the viewpoint of the dispersibility of component (B) and the suppression of sedimentation of component (B) when a coating material is left to stand, 1-methoxy-2-propanol, 2-propanol, and ethanol are preferable, and 1-methoxy-2-propanol, and 2-propanol are more preferable. As the solvent, one kind of or a mixture of two or more kinds of them can be used.

The coating material according to the present invention can be obtained by mixing and stirring these components.

As a preferable method for producing the coating material according to the present invention, for example, the following method can be mentioned:
A method including:

a step (1) of mixing and stirring 100 parts by mass of component (B) that is fine rare-earth phosphate particles, 1 to 30 parts by mass of component (C) that is a silane-coupling agent, and 500 to 2000 parts by mass of a solvent (E) thereby obtaining a first mixture;
a step (2) of further adding component (D) that is a compound having an isocyanate group and a polymerizable functional group excluding an isocyanate group into the first mixture obtained in the step (1) so that component (D) is in an amount of 1 to 30 parts by mass with respect to 100 parts by mass of component (B) that is fine rare-earth phosphate particles, and performing mixing and stirring of the mixture of the compound (D) and the first mixture thereby obtaining a second mixture; and
a step (3) of further adding component (A) that is a polyfunctional (meth)acrylate into the second mixture obtained in the step (2), and performing mixing and stirring of the mixture of component (A) and the second mixture thereby obtaining a coating material containing 100 parts by mass of component (A) that is a polyfunctional (meth)acrylate and 0.1 to 50 parts by mass of component (B) that is fine rare-earth phosphate particles.

Equipment to be used for the mixing and stirring in the above steps (1) to (3) is not particularly limited, and a known mixing and stirring machine can be used. The mixing and stirring of the steps (1) to (3) can also be performed by using ultrasonic waves.

When performing the mixing and stirring of the steps (1) to (3), it is preferable to use small spheres such as zirconia beads in order to assist the mixing and stirring. The size of the small spheres may be appropriately selected in consideration of the average particle diameter of component (B) that is fine rare-earth phosphate particles. The size of the small spheres may be a diameter of usually 0.1 to 3 mm, and preferably 0.3 to 1 mm. The amount of the small spheres to be used may be, from the viewpoint of the dispersibility of component (B) that is fine rare-earth phosphate particles and the operability, usually 1000 to 10000 parts by mass, and preferably 2000 to 5000 parts by mass, with respect to 100 parts by mass of component (B).

The amount of component (E) that is a solvent in the above step (1) may be, from the viewpoints of the dispersibility of component (B) that is fine rare-earth phosphate particles and of the suppression of sedimentation of component (B) when a coating material is left to stand, and from the viewpoint of controlling the solid content and viscosity of the coating material according to the present invention in appropriate ranges, usually 500 to 2000 parts by mass, and preferably 700 to 1500 parts by mass.

## 2. Film for projection screen

The film for projection screen according to the present invention contains a light-diffusing layer formed by using the coating material according to the present invention. The film for projection screen according to the present invention usually has a light-diffusing layer formed by using the coating material according to the present invention, on at least one side of a layer of a film substrate.

The coating material according to the present invention has been described above. The method for forming the light-diffusing layer by using the coating material according to the present invention is not particularly limited, and a known web coating method can be used. Examples of the method include methods such as rod coating, roll coating, gravure coating, reverse coating, roll brush, dip coating, spray coating, spin coating, air knife coating, and die coating. Among these methods, from the viewpoint of making the thickness of the light-diffusing layer uniform, rod coating is preferable, and rod coating that uses a Meyer bar as a rod (hereinafter, may be abbreviated as "Meyer bar coating method") is more preferable.

The thickness of the light-diffusing layer is not particularly limited and can be controlled to any thickness as desired. The thickness of the light-diffusing layer may be, from the viewpoint of imparting the high video display property, usually 0.5 $\mu$m or more, preferably 1 $\mu$m or more, more preferably 2 $\mu$m or more, and furthermore preferably 3 $\mu$m or more. On the other hand, the thickness of the light-diffusing layer may be, from the viewpoints of keeping the bending resistance of the film for projection screen according to the present invention favorable and making the film easy to handle as a film roll, usually 60 $\mu$m or less, preferably 30 $\mu$m or less, more preferably 20 $\mu$m or less, furthermore preferably 10 $\mu$m or less, and most preferably 7 $\mu$m or less.

As the film substrate, from the viewpoint of imparting the high transparency to the film for projection screen according to the present invention and from the viewpoint of making the film non-colored, a film substrate having high transparency is preferable, and a film substrate having high transparency and further being non-colored is more preferable.

The total light transmittance (measured in accordance with JIS K7361-1: 1997) of the film substrate may be usually 80% or more, preferably 85% or more, more preferably 88% or more, furthermore preferably 90% or more, and most preferably 92% or more. It is preferable to have a higher total light transmittance. The total light transmittance can be measured by using, for example, a turbidity meter, "NDH2000" (trade name) available from NIPPON DENSHOKU INDUSTRIES CO., LTD., in accordance with JIS K7361-1: 1997.

The yellowness index (measured in accordance with JIS K7105: 1981) of the film substrate may be usually 5 or less, preferably 3 or less, more preferably 2 or less, and furthermore preferably 1 or less. It is preferable to have a lower yellowness index. The yellowness index can be measured by using, for example, a colorimeter, "SolidSpec-3700" (trade name) available from Shimadzu Corporation, in accordance with JIS K7105: 1981.

Examples of the film substrate include films of a cellulose ester-based resin such as triacetyl cellulose; a polyester-based resin such as polyethylene terephthalate; a cyclic hydrocarbon-based resin such as an ethylene-norbornene copolymer; an acrylic resin such as polymethyl methacrylate, polyethyl methacrylate, or a vinylcyclohexane-methyl(meth)acrylate copolymer; an aromatic polycarbonate-based resin; a polyolefin-based resin such as polypropylene, or 4-methyl-pentene-1; a polyamide-based resin; a polyarylate-based resin; a polymer-type urethane acrylate-based resin; a polyimide-based resin; and the like. These films include a non-oriented film, a uniaxially oriented film, and a biaxially oriented film. Further, these films include a laminated film in which one kind or two or more kinds of the films are laminated one on another in two or more layers.

The thickness of the film substrate is not particularly limited and can be controlled to any thickness as desired. In a case where the film for projection screen according to the present invention does not require high rigidity, the thickness of the film substrate may be, from the viewpoint of the handleability and from the viewpoint of conforming to the standard as a glass scattering prevention film, usually 10 $\mu$m or more, preferably 30 $\mu$m or more, and more preferably 50 $\mu$m or more. In addition, the thickness of the film substrate may be, from the viewpoint of the economic efficiency, usually 250 $\mu$m or less, preferably 150 $\mu$m or less, and more preferably 100 $\mu$m or less. In a case where the film for projection screen according to the present invention requires high rigidity, the thickness of the film substrate may be usually 200 $\mu$m or more, preferably 300 $\mu$m or more, and more preferably 400 $\mu$m or more. On the other hand, the thickness of the film substrate may be, from the viewpoint of meeting the requirement for thinning of an article, usually 1500 $\mu$m or less, preferably 1000 $\mu$m or less, and more preferably 700 $\mu$m or less.

In forming the light-diffusing layer, the surface on which the light-diffusing layer to be formed of or both surfaces of the film substrate may be subjected to an easy adhesion treatment such as corona discharge treatment or anchor coat formation in advance, in order to enhance the adhesive strength with the light-diffusing layer.

The film for projection screen according to the present invention may have an optional layer(s) other than the light-diffusing layer and the layer of the film substrate. Examples of the optional layer include a hard coat, an anchor coat, a pressure-sensitive adhesive layer, a transparent conductive layer, an infrared shielding layer, an infrared reflecting layer, an electromagnetic wave shielding layer, an electromagnetic wave reflecting layer, and a reflective layer. The optional layer is not limited to one layer, and may be two or more layers. In a case where the optional layer is in two or more layers, the kind is not limited to one kind, and may be two or more kinds.

FIG. 2 is a conceptual diagram of a cross section showing one embodiment of the film for projection screen according to the present invention. The film in this embodiment is a type to be bonded to the outdoor side of a glass window, and has a pressure-sensitive adhesive layer 1, an infrared shielding layer 2, a first anchor coat 3, a layer 4 of a film substrate, a second anchor coat 5, a light-diffusing layer 6, and a weather-resistant hard coat 7 in order from the side to be bonded to the glass. The film in this embodiment is a so-called transmission type, and a video content is projected from the indoor side and viewed from the outdoor side.

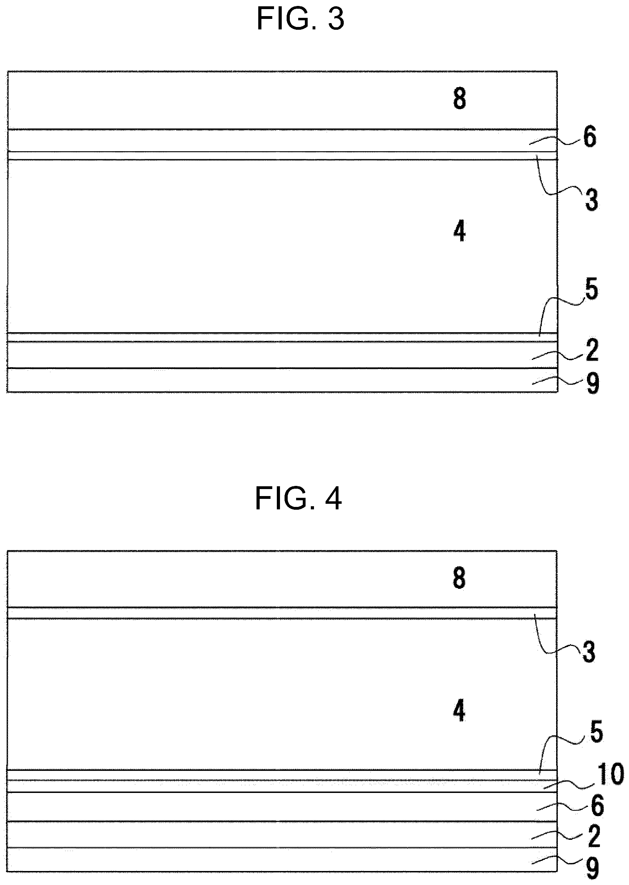

FIG. 3 is a conceptual diagram of a cross section showing another embodiment of the film for projection screen according to the present invention. The film in this embodiment is a type to be bonded to the indoor side of a glass window, and has a weather-resistant pressure-sensitive adhesive layer 8, a light-diffusing layer 6, a first anchor coat 3, a layer 4 of a film substrate, a second anchor coat 5, an infrared shielding layer 2, and a hard coat 9 in order from the side to be bonded to the glass. The film in this embodiment is a so-called transmission type, and a video content is projected from the indoor side and viewed from the outdoor side.

FIG. 4 is a conceptual diagram of a cross section showing another embodiment of the film for projection screen according to the present invention. The film in this embodiment is a type to be bonded to the indoor side of a glass window, and has a weather-resistant pressure-sensitive adhesive layer 8, a first anchor coat 3, a layer 4 of a film substrate, a second anchor coat 5, a reflective layer 10, a light-diffusing layer 6, an infrared shielding layer 2, and a hard coat 9. The film in this embodiment is a so-called reflection type, and a video content is projected from the indoor side and viewed from the indoor side.

The film for projection screen according to the present invention has a total light transmittance (measured in accordance with JIS K7361-1: 1997) of preferably 85% or more, more preferably 88% or more, furthermore preferably 90% or more, and still more preferably 91% or more. If the total light transmittance is 85% or more, the film for projection screen according to the present invention, which is utilized in the form of being bonded to a medium having transparent visibility such as a glass window, can be suitably used as a film for projection screen on which a video content is projected for display when desired, while maintaining the transparent visibility for the routine use. It is preferable to have a higher total light transmittance. The total light transmittance can be measured by using, for example, a turbidity meter, "NDH2000" (trade name) available from NIPPON DENSHOKU INDUSTRIES CO., LTD., in accordance with JIS K7361-1: 1997.

The film for projection screen according to the present invention may have a haze (measured under the condition that light is incident from the light-diffusing layer side surface, in accordance with JIS K7136: 2000) of preferably 30% or less, more preferably 20% or less, furthermore preferably 15% or less, and most preferably 12% or less. If the haze is 30% or less, the transparency when a video content is not projected for display can be retained. From the viewpoint of retaining the transparency, it is preferable to have a lower haze. The haze can be measured by using, for example, a turbidity meter, "NDH2000" (trade name) available from NIPPON DENSHOKU INDUSTRIES CO., LTD., under the condition that light is incident from the light-diffusing layer side surface, in accordance with JIS K7136: 2000.

The film for projection screen according to the present invention has a diffusivity of 2% or more, preferably 4% or more, and more preferably 7% or more. From the viewpoint of the video display property, it is preferable to have a higher diffusivity. Herein, the diffusivity is a value measured and calculated in accordance with test (iii) of the following Examples.

The film for projection screen according to the present invention may have a viewing angle (at which the image projected for display can be clearly seen) of preferably 100° or more, more preferably 120° or more, furthermore preferably 140° or more, and most preferably 160° or more. From the viewpoint of the video display property, it is preferable to have a wider viewing angle. Herein, the viewing angle refers to the maximum angle at which the evaluation is △ or ○ when evaluated in accordance with test (iv) of the following Examples.

The yellowness index (measured in accordance with JIS K7105: 1981) of a hard coat laminated film of the present invention in the film for projection screen according to the present invention is preferably 5 or less, more preferably 3 or less, furthermore preferably 2 or less, and most preferably 1.6 or less. It is preferable to have a lower yellowness index. When the yellowness index of a film is 5 or less, the film can be suitably used as a film for projection screen. The yellowness index can be measured by using a colorimeter, for example, "SolidSpec-3700" (trade name) available from Shimadzu Corporation, in accordance with JIS K7105: 1981.

3. Projection screen

The projection screen according to the present invention contains a light-diffusing layer formed by using the coating material according to the present invention. In one typical embodiment, the projection screen according to the present invention is made by bonding the film for projection screen according to the present invention to a part or all of a medium having transparent visibility such as a glass window. In one other typical embodiment, the projection screen according to the present invention is made by forming a light-diffusing layer on a part or all of a medium having transparent visibility such as a glass window directly or by interposing an anchor coat therebetween with the use of the coating material according to the present invention.

The medium having transparent visibility may be a transparent resin plate (including a laminate). By using the transparent resin plate as a medium, problems of glass (for example, being fragile due to low impact resistance, low processability, high specific gravity and heavy weight, and the like) can be fundamentally greatly improved. Further, by using the transparent resin plate as the medium, it becomes easy to produce one having a surface in a curved shape with high productivity.

Examples

Hereinafter, the present invention will be described with reference to Examples, however, the present invention is not limited to the following Examples. Examples 5 and 13 fall outside the scope of the claims and are provided for reference purposes only.

Measurement methods

(i) Total light transmittance

The total light transmittance was measured by using a turbidity meter, "NDH2000" (trade name) available from NIPPON DENSHOKU INDUSTRIES CO., LTD. under the condition that light was incident from the light-diffusing layer side surface of a film, in accordance with JIS K7361-1: 1997.

(ii) Haze

The haze was measured by using a turbidity meter, "NDH2000" (trade name) available from NIPPON DENSHOKU INDUSTRIES CO., LTD. under the condition that light was incident from the light-diffusing layer side surface of a film, in accordance with JIS K7136: 2000.

(iii) Diffusivity

By using a variable angle photometer, "GC 5000L" (trade name) available from NIPPON DENSHOKU INDUSTRIES CO., LTD., light was incident on the light-diffusing layer side surface of a film at a projection angle of 0°, and the transmittance and the reflectance were measured at a light receiving angle of from -85° to 85° at 1° intervals, and then the diffusivity was calculated by a program (according to the following calculation formula) built in the variable angle photometer.

$$\text{Diffusivity} = (L_{20} + L_{70})/(2 \cdot L_5) = (T_{20}/\cos 20° + T_{70}/\cos 70°)/(2 \cdot T_5/\cos 5°)$$

Herein, $L_{20}$ represents the reflectance at a light receiving angle of 20°, $L_{70}$ represents the reflectance at a light receiving angle of 70°, $L_5$ represents the reflectance at a light receiving angle of 5°, $T_{20}$ represents the transmittance at a light receiving angle of 20°, $T_{70}$ represents the transmittance at a light receiving angle of 70°, and $T_5$ represents the transmittance at a light receiving angle of 5°.

(iv) Viewing angle

100 parts by mass of an addition reaction-type silicone pressure sensitive adhesive, "KR-3704" (trade name) available from Shin-Etsu Chemical Co., Ltd., 0.5 parts by mass of a platinum compound-based addition reaction catalyst, "CAT-PL-50T" (trade name) available from Shin-Etsu Chemical Co., Ltd., and 20 parts by mass of toluene were mixed and stirred to obtain a coating material for formation of an adhesive layer. Next, the coating material for formation of an adhesive layer was applied onto a surface opposite to the light-diffusing layer formed side of a film for projection screen so as to have a thickness after curing of 30 μm, and heated and cured under the conditions of 130°C for one minute to form an adhesive layer. Subsequently, the adhesive layer side surface of the film for projection screen was bonded to a float plate glass (having a thickness of 3 mm) specified in JIS R3202: 2011 available from Testpiece Co., Ltd. to prepare a projection screen. Next, by using a projector, "ZenBeam E1" (trade name) available from ASUSTeK COMPUTER INC., an image was projected from the glass surface side of the projection screen under the conditions of an incident angle of 0° and a distance between the glass surface and the projector lens of 30 cm, in a dark place; and a visual acuity chart was then displayed at a predetermined position so that a Landolt ring of the visual acuity chart had a predetermined size (with which the visual acuity was determined to be 1.0 when the slit of the ring was discriminated at a position 4 m away from the chart (hereinafter, abbreviated as the size for visual acuity 1.0) or so that the visual acuity was determined to be 1.5 when the slit of the ring was discriminated at a position 4 m away from the chart (hereinafter, abbreviated as the size for visual acuity 1.5)). Subsequently, to the Landolt ring-displayed part on the projection screen, a subject (the corrected visual acuity of the eye used in the test (the unused eye was covered with an occluder) was 1.0) who was waited in a place at an angle of 80° (the angle between the normal line to the light-diffusing layer side surface of the projection screen passing through the Landolt ring-displayed part and the line connecting the Landolt ring-displayed part and the place where a subject was waited was 80°, that is 160° in terms of viewing angle, hereinafter, the same applies) and a distance of 60 cm, answered the position of the slit of the Landolt ring displayed. Evaluation was made on the basis of the following criteria.

○ (Very good): Any size of the Landolt ring was discriminated.
△ (Good): The size for visual acuity 1.0 of the Landolt ring was discriminated, but the size for visual acuity 1.5 of the Landolt ring was not discriminated.
× (Poor): Any size of the Landolt ring was not discriminated.

In a similar manner, tests in which the angle at which the subject was waited was changed to an angle of 70° (viewing angle of 140°), an angle of 60° (viewing angle of 120°), an angle of 50° (viewing angle of 100°), and an angle of 40° (viewing angle of 80°) were also conducted.

(v) Chromatic aberration

In a similar manner as in the above test (iv), a projection screen was prepared, and an image is projected on the projection screen in a similar manner as in the test (iv), and a blue and red checkered pattern was displayed so that the length of one side of the square was 3 mm. Next, for the part of the checkered pattern displayed on the projection screen, the checkered pattern was visually observed from a place at an angle of 0° and a distance of 60 cm, and evaluated on the basis of the following criteria.

○ (Good): No chromatic aberration was observed.
△ (Fair): Slight chromatic aberration was observed.
× (Poor): Clear chromatic aberration was observed.

(vi) Yellowness index

The yellowness index was measured by using a colorimeter, "SolidSpec-3700" (trade name) available from Shimadzu Corporation under the condition that light was incident from the light-diffusing layer side surface of a film, in accordance with JIS K7105: 1981.

(vii) Pencil hardness

The light-diffusing layer side surface of a film for projection screen was measured by using a pencil, "uni" (trade name) available from MITSUBISHI PENCIL CO., LTD. under the conditions of a test length of 25 mm and a load of 200 g, in accordance with JIS K5600-5-4: 1999. Whether or not scars were generated was determined by visually observing the surface of a sample under a fluorescent lamp at a position 50 cm away from the fluorescent lamp.

(viii) Surface appearance

The light-diffusing layer side surface of a film for projection screen was visually observed under a fluorescent lamp while changing variously the incident angle of the light, and evaluated on the basis of the following criteria.
A (Very good): Any undulation or scars on the surface were not observed, and uniform transparency was observed even by up-close observation through light.
B (Good): Any undulation or scars on the surface were not observed, but a place where the transparency was slightly different was observed by up-close observation through light.
C (Slightly poor): Any scars on the surface were not observed, but slight undulation on the surface was observed by up-close observation. Further, a place where the transparency was different was observed by up-close observation through light.
D (Poor): Undulation or scars on the surface were observed, and a place where the transparency was apparently different was observed.

(ix) Mandrel test (index of crack resistance)

A test for bending resistance (crack resistance) with a cylindrical mandrel method was conducted by using a sample taken from a film for projection screen so that the sample was 100 mm in the machine direction of the film × 50 mm in the lateral direction of the film, in accordance with JIS K5600-5-1: 1999. The diameter of a mandrel having the smallest diameter among the mandrels in each of which the coat (light-diffusing layer) was not cracked was determined. Evaluation was made on the basis of the following criteria.

A (Very good): 10 mm or less.

B (Good): 12 mm, 16 mm, or 20 mm.

C (Slightly poor): 25 mm, or 32 mm.

D (Poor): A crack was generated even when the diameter of the mandrel was 32 mm.

(x) Curl resistance

A sample of 10 cm in the machine direction × 10 cm in the lateral direction was taken from a film roll of a film for projection screen, and the heights of lifting due to curling at the four corners were measured when the sample was placed on a horizontal plane with the light-diffusing layer side up. Among the four corners, a corner with the largest height of lifting was used as the value of the height of lifting due to curling. Evaluation was made on the basis of the following criteria.

A (Very good): 2 mm or less.

B (Good): More than 2 mm and 5 mm or less.

C (Slightly poor): More than 5 mm and 10 mm or less.

D (Poor): More than 10 mm.

(xi) Resistance to moisture and heat (cross-cut adhesion test after moisture and heat treatment)

A film for projection screen was treated in a thermo-hygrostat chamber at a temperature of 60°C and a relative humidity of 90% for 500 hours. Next, a cut of 100 grid squares (1 grid square = 1 mm × 1 mm) was made from the light-diffusing layer side of the treated film for projection screen, in accordance with JIS K5600-5-6: 1999. Subsequently, a tape for adhesion test was stuck onto the grid squares, rubbed with fingers, and then peeled off. Evaluation was made in accordance with Table 1 of the above JIS standard as the evaluation criteria.

Classification 0: The edges of the cut were completely smooth and there was no peeling on any grid square.

Classification 1: There were small peelings of the coat at intersection points of the cut. A cross-cut area of not greater than 5% was affected.

Classification 2: The coat was peeled along the edges of the cut, and/or at intersection points. A cross-cut area of greater than 5%, but not greater than 15%, was affected.

Classification 3: The coat was severely peeled partially or thoroughly along the edges of the cut, and/or various parts of the grid squares were peeled partially or thoroughly. A cross-cut area of greater than 15%, but not greater than 35%, was affected.

Classification 4: The coat was severely peeled partially or thoroughly along the edges of the cut, and/or several grid squares were peeled partially or thoroughly. A cross-cut area of greater than 35%, but not greater than 65%, was affected.

Classification 5: The case where the degree of peeling exceeds that of the classification 4 was regarded as classification 5.

Raw materials used

(A) Base resin

(A1) Polyfunctional poly(meth)acrylate

(A1-1) Polyurethane acrylate, "Art-Resin UN-954" (trade name) available from Negami Chemical Industrial CO., LTD. The number average molecular weight, mass average molecular weight, and Z average molecular weight are 2000, 4800, and 9600, respectively in terms of polystyrene. The number of acryloyl groups is 6. The solid content is 60% by mass.

(A1-2) Polyurethane acrylate, "Art-Resin UN-952" (trade name) available from Negami Chemical Industrial CO., LTD. The number average molecular weight, mass average molecular weight, and Z average molecular weight are 2500, 9100, and 23000, respectively in terms of polystyrene. The number of acryloyl groups is 10. The solid content is 60% by mass.

(A1-3) Polyurethane acrylate, "Art-Resin UN-953" (trade name) available from Negami Chemical Industrial CO., LTD. The number average molecular weight, mass average molecular weight, and Z average molecular weight are 2000, 26000, and 110000, respectively in terms of polystyrene. The number of acryloyl groups is 20. The solid content is 40% by mass.

(A-4) Dipentaerythritol hexaacrylate, "KAYARAD DPHA" (trade name) available from Nippon Kayaku Co., Ltd.

(A-5) Amorphous polyester resin, "VYLON 240SS" (trade name) available from TOYOBO CO., LTD.

(B) Fine rare-earth phosphate particles

(B-1) Yttrium phosphate, available from MITSUI MINING & SMELTING CO., LTD. The average particle diameter is 0.085 μm.

(C) Silane-coupling agent

(C-1) Vinyltrimethoxysilane, "KBM-1003" (trade name) available from Shin-Etsu Chemical Co., Ltd.

(D) Compound having isocyanate group and polymerizable functional group excluding isocyanate group

(D-1) 2-Isocyanatoethyl acrylate, "Karenz AOI" (trade name) available from SHOWA DENKO K.K.

(E) Solvent

(E-1) 1-Methoxy-2-propanol

(F) Others

(F-1) Acetophenone-based photopolymerization initiator (1-hydroxy-cyclohexyl-phenylketone), "IRGACURE184" (trade name) available from BASF

(F-2) Acetophenone-based photopolymerization initiator (2-hydroxy-1-{4-[4-(2-hydroxy-2-methyl-propionyl)-benzyl]phenyl}-2-methyl-propane-1-one), "IRGACURE 127" (trade name) available from BASF

(F-3) Compound having two or more isocyanate groups in one molecule, "CORONATE HX" (trade name) available from Tosoh Corporation

(F-4) Silicone-acrylic copolymer-based leveling agent, "DISPARLON NSH-8430HF" (trade name) available from Kusumoto Chemicals, Ltd. The solid content is 10% by mass.

Example 1

(a) Preparation of coating material for formation of light-diffusing layer

100 parts by mass of the (B-1), 10 parts by mass of the (C-1), and 900 parts by mass of the (E-1) were mixed, and further, into the mixture, 2500 parts by mass of zirconia beads (having a diameter of 0.60 mm) were added in order to assist the mixing and stirring, and the stirring was performed for 15 minutes by using a tube mixer. Next, into the resultant mixture, 10 parts by mass of the component (D-1) was added, and further the obtained mixture was subjected to an ultrasonic treatment for 30 minutes, and then zirconia beads were filtered out to obtain a suspension. Subsequently, 167 parts by mass (100 parts by mass in terms of solid content) of the (A1-1), 45.9 parts by mass of the suspension (4.5 parts by mass of the (B-1), 0.45 parts by mass of the (C-1), 0.45 parts by mass of the (D-1), and 40.5 parts by mass of the (E-1)), 70.5 parts by mass of the (E-1), 2.4 parts by mass of the (F-1), 0.6 parts by mass of the (F-2), and 2 parts by mass (0.2 parts by mass in terms of solid content) of the (F-4) were mixed and stirred to obtain a coating material for formation of a light-diffusing layer.

(b) Preparation of film for projection screen

The coating material for formation of a light-diffusing layer, obtained in the above (a) was applied onto one side of a double-sided easy adhesive biaxially-oriented polyethylene terephthalate-based resin film having a thickness of 50 μm, "LUMIRROR" (trade name) available from Toray Industries, Inc. by using a coater according to the Meyer-bar coating method so as to have a thickness after curing of 5 μm, was dried, and was cured by the irradiation with UV rays to form a light-diffusing layer.

The above tests (i) to (xi) were conducted. The results are shown in Table 1. In this regard, all the amounts in terms of solid content are shown in the table except for the solvent (E-1). Further, each of the amounts of the (E-1) shown in the table was the sum of the amount of the (E-1) contained in the above suspension and the amount of the (E-1) newly mixed when a component other than the suspension, such as component (A) and the suspension were mixed together. The same applies to the following Examples. The expression "PJ" in the table is an abbreviation for "projection screen".

Examples 2 to 4

The formation of the light-diffusing layer and the evaluation of the film for projection screen were made in a similar manner as in Example 1 except that each of the ones shown in Table 1 was used in place of the (A1-1) as component (A) and the amount of the (E-1) to be newly mixed when a component other than the suspension and the suspension were mixed was appropriately controlled so that the viscosity of the coating material for formation of a light-diffusing layer could be made adequate. The results are shown in Table 1.

Example 5

100 parts by mass of the component (A-5), 45.9 parts by mass of the suspension prepared in Example 1 (4.5 parts by mass of the (B-1), 0.45 parts by mass of the (C-1), 0.45 parts by mass of the (D-1), and 40.5 parts by mass of the (E-1)), 0.5 parts by mass of the (E-1), 10 parts by mass of the (F-3), and 2 parts by mass (0.2 parts by mass in terms of solid content) of the (F-4) were mixed and stirred to obtain a coating material for formation of a light-diffusing layer. Subsequently, the coating material was applied onto one side of a double-sided easy adhesive biaxially-oriented polyethylene terephthalate-based resin film having a thickness of 50 μm, "LUMIRROR" (trade name) available from Toray Industries, Inc. by using a coater according to the Meyer-bar coating method so as to have a thickness after drying of 5 μm, and was dried to form a light-diffusing layer. The above tests (i) to (xi) were conducted. The results are shown in Table 1.

Examples 6 to 9

The formation of the light-diffusing layer and the evaluation of the film for projection screen were made in a similar manner as in Example 1 except that the amount of the suspension was changed, and the amounts of components (B) to (E) were changed to the amounts as shown in Table 1 or 2 by appropriately controlling the amount of the (E-1) to be newly mixed when a component other than the suspension and the suspension were mixed so that the viscosity of the coating material for formation of a light-diffusing layer could be made adequate. The results are shown in Table 1 or 2.

Examples 10 to 12

The formation of the light-diffusing layer and the evaluation of the film for projection screen were made in a similar manner as in Example 1 except that the preparation of the coating material for formation of a light-diffusing layer was changed as follows. The results are shown in Table 1 or 2.

Preparation of coating material for formation of light-diffusing layer used in Example 10

100 parts by mass of the (B-1), 10 parts by mass of the (C-1), and 900 parts by mass of the (E-1) were mixed, and further, into the mixture, 2500 parts by mass of zirconia beads (having a diameter of 0.60 mm) were added in order to assist the mixing and stirring, and the stirring was performed for 15 minutes by using a tube mixer. Further, the resultant mixture was subjected to an ultrasonic treatment for 30 minutes, and then zirconia beads were filtered out to obtain a suspension. Subsequently, 167 parts by mass (100 parts by mass in terms of solid content) of the (A1-1), 45.45 parts by mass of the suspension (4.5 parts by mass of the (B-1), 0.45 parts by mass of the (C-1), and 40.5 parts by mass of the (E-1)), 70.5 parts by mass of the (E-1), 2.4 parts by mass of the (F-1), 0.6 parts by mass of the (F-2), and 2 parts by mass (0.2 parts by mass in terms of solid content) of the (F-4) were mixed and stirred to obtain a coating material for formation of a light-diffusing layer.

Preparation of coating material for formation of light-diffusing layer used in Example 11

100 parts by mass of the (B-1), 10 parts by mass of the (D-1), and 900 parts by mass of the (E-1) were mixed, and further, into the mixture, 2500 parts by mass of zirconia beads (having a diameter of 0.60 mm) were added in order to assist the mixing and stirring, and the stirring was performed for 15 minutes by using a tube mixer. Further, the resultant mixture was subjected to an ultrasonic treatment for 30 minutes, and then zirconia beads were filtered out to obtain a suspension. Subsequently, 167 parts by mass (100 parts by mass in terms of solid content) of the (A1-1), 45.45 parts by mass of the suspension (4.5 parts by mass of the (B-1), 0.45 parts by mass of the (D-1), and 40.5 parts by mass of the (E-1)), 70.5 parts by mass of the (E-1), 2.4 parts by mass of the (F-1), 0.6 parts by mass of the (F-2), and 2 parts by mass (0.2 parts by mass in terms of solid content) of the (F-4) were mixed and stirred to obtain a coating material for formation of a light-diffusing layer.

Preparation of coating material for formation of light-diffusing layer used in Example 12

100 parts by mass of the (B-1), and 900 parts by mass of the (E-1) were mixed, and further, into the mixture, 2500 parts by mass of zirconia beads (having a diameter of 0.60 mm) were added in order to assist the mixing and stirring, and the stirring was performed for 15 minutes by using a tube mixer. Further, the resultant mixture was subjected to an ultrasonic treatment for 30 minutes, and then zirconia beads were filtered out to obtain a suspension. Subsequently, 167 parts by mass (100 parts by mass in terms of solid content) of the (A1-1), 45 parts by mass of the suspension (4.5 parts by mass of the (B-1), and 40.5 parts by mass of the (E-1)), 70.5 parts by mass of the (E-1), 2.4 parts by mass of the (F-1), 0.6 parts by mass of the (F-2), and 2 parts by mass (0.2 parts by mass in terms of solid content) of the (F-4) were mixed and stirred to obtain a coating material for formation of a light-diffusing layer.

[Table 1]

Table 1

| | | Ex.1 | Ex.2 | Ex.3 | Ex.4 | Ex.5 | Ex.6 |
|---|---|---|---|---|---|---|---|
| Formulation of coating material (parts by mass) | A1-1 | 100 | – | – | – | – | 100 |
| | A1-2 | – | 100 | – | – | – | – |
| | A1-3 | – | – | 100 | – | – | – |
| | A-4 | – | – | – | 100 | – | – |
| | A-5 | – | – | – | – | 100 | – |
| | B-1 | 4.5 | 4.5 | 4.5 | 4.5 | 4.5 | 25 |
| | C-1 | 0.45 | 0.45 | 0.45 | 0.45 | 0.45 | 2.5 |
| | D-1 | 0.45 | 0.45 | 0.45 | 0.45 | 0.45 | 2.5 |
| | E-1 | 111 | 111 | 41 | 181 | 41 | 225 |
| | F-1 | 2.4 | 2.4 | 2.4 | 2.4 | – | 2.4 |
| | F-2 | 0.6 | 0.6 | 0.6 | 0.6 | – | 0.6 |
| | F-3 | – | – | – | – | 10 | – |
| | F-4 | 0.2 | 0.2 | 0.2 | 0.2 | 0.2 | 0.2 |
| Thickness of light-diffusing layer μm | | 5 | 5 | 5 | 5 | 5 | 5 |
| Evaluation results of film for PJ | Total light transmittance % | 91.6 | 91.6 | 91.6 | 91.5 | 91.2 | 89.6 |
| | Haze % | 10.4 | 10.2 | 9.3 | 9.6 | 5.3 | 37.6 |
| | Diffusivity % | 7.9 | 7.4 | 7.0 | 7.2 | 4.7 | 16.2 |
| | Viewing angle:160° | ✕ | ✕ | ✕ | ✕ | ✕ | △ |
| | Viewing angle:140° | △ | △ | △ | △ | ✕ | ○ |
| | Viewing angle:120° | ○ | ○ | ○ | ○ | △ | ○ |
| | Viewing angle:100° | ○ | ○ | ○ | ○ | ○ | ○ |
| | Viewing angle:80° | ○ | ○ | ○ | ○ | ○ | ○ |
| | Chromatic aberration | ○ | ○ | ○ | ○ | ○ | ○ |
| | Yellowness index | 1.5 | 1.6 | 1.6 | 1.5 | 1.5 | 2.9 |
| | Pencil hardness | 2H | 2H | 2H | 3H | HB | 2H |
| | Surface appearance | A | A | A | B | C | A |
| | Mandrel test | A | A | A | B | A | A |
| | Curl resistance | A | A | A | D | A | A |
| | Resistance to moisture and heat | Class 0 | Class 0 | Class 0 | Class 1 | Class 3 | Class 0 |

[Table 2]

Table 2

| | | Ex.7 | Ex.8 | Ex.9 | Ex.10 | Ex.11 | Ex.12 |
|---|---|---|---|---|---|---|---|
| Formulation of coating material (parts by mass) | A1-1 | 100 | 100 | 100 | 100 | 100 | 100 |
| | A1-2 | – | – | – | – | – | – |
| | A1-3 | – | – | – | – | – | – |
| | A-4 | – | – | – | – | – | – |
| | A-5 | – | – | – | – | – | – |
| | B-1 | 15 | 9 | 2 | 4.5 | 4.5 | 4.5 |
| | C-1 | 1.5 | 0.90 | 0.20 | 0.45 | – | – |
| | D-1 | 1.5 | 0.90 | 0.20 | – | 0.45 | – |
| | E-1 | 205 | 146 | 88 | 111 | 111 | 111 |
| | F-1 | 2.4 | 2.4 | 2.4 | 2.4 | 2.4 | 2.4 |
| | F-2 | 0.6 | 0.6 | 0.6 | 0.6 | 0.6 | 0.6 |
| | F-3 | – | – | – | – | – | – |
| | F-4 | 0.2 | 0.2 | 0.2 | 0.2 | 0.2 | 0.2 |
| Thickness of light-diffusing layer μm | | 5 | 5 | 5 | 5 | 5 | 5 |
| Evaluation results of film for PJ | Total light transmittance % | 91.0 | 91.4 | 91.7 | 91.6 | 91.6 | 91.5 |
| | Haze % | 26.9 | 18.4 | 5.2 | 10.9 | 11.6 | 12.0 |
| | Diffusivity % | 14.1 | 11.9 | 4.8 | 7.1 | 8.1 | 7.8 |
| | Viewing angle:160° | △ | × | × | × | × | × |
| | Viewing angle:140° | ○ | △ | × | △ | △ | △ |
| | Viewing angle:120° | ○ | ○ | △ | ○ | ○ | ○ |
| | Viewing angle:100° | ○ | ○ | ○ | ○ | ○ | ○ |
| | Viewing angle:80° | ○ | ○ | ○ | ○ | ○ | ○ |
| | Chromatic aberration | ○ | ○ | ○ | ○ | ○ | ○ |
| | Yellowness index | 2.2 | 1.9 | 1.6 | 1.9 | 1.9 | 1.8 |
| | Pencil hardness | 2H | 2H | 2H | H | 2H | H |
| | Surface appearance | A | A | A | A | A | C |
| | Mandrel test | A | A | A | A | A | A |
| | Curl resistance | A | A | A | A | A | A |
| | Resistance to moisture and heat | Class 0 | Class 0 | Class 0 | Class 2 | Class 1 | Class 5 |

Example 13

167 parts by mass (100 parts by mass in terms of solid content) of the (A1-1), 11.25 parts by mass (4.5 parts by mass in terms of solid content) of a dispersion of zirconium oxide fine particles (having an average particle diameter of 0.1

## EP 3 879 340 B1

μm) in methyl isobutyl ketone/2-methylpropyl alcohol (a mixture at a volume ratio of 7/3), 100 parts by mass of the (E-1), 2.4 parts by mass of the (F-1), 0.6 parts by mass of the (F-2), and 2 parts by mass (0.2 parts by mass in terms of solid content) of the (F-4) were mixed and stirred to obtain a coating material for formation of a light-diffusing layer. The coating material for formation of a light-diffusing layer was applied onto one side of a double-sided easy adhesive biaxially-oriented polyethylene terephthalate-based resin film having a thickness of 50 μm, "LUMIRROR" (trade name) available from Toray Industries, Inc. by using a coater according to the Meyer-bar coating method so as to have a thickness after curing of 5 μm, was dried, and was cured by the irradiation with UV rays to form a light-diffusing layer. As a result of the tests (i) to (iii), the total light transmittance was 86.9%, the haze was 2.5%, and the diffusivity was 1.3%.

The film for projection screen, in which the light-diffusing layer was formed by using the coating material according to the present invention, had an excellent video display property (high diffusivity), high transparency, and a wide viewing angle, hardly generated chromatic aberration, and had no color tint (lower yellowness index). The film for projection screen, in which the light-diffusing layer was formed by using the preferable coating material according to the present invention, had further high surface hardness, and favorable surface appearance. In addition, the film for projection screen, in which the light-diffusing layer was formed by using the preferable coating material according to the present invention, can be expected to have favorable workability when bonded to a glass window or the like, and to hardly generate a trouble such as cracking of the light-diffusing layer even with time, from the excellent results of the mandrel test, the curl resistance, and the moist heat resistance.

REFERENCE SIGNS LIST

1    Pressure-sensitive adhesive layer
2    Infrared shielding layer
3    First anchor coat
4    Layer of film substrate
5    Second anchor coat
6    Light-diffusing layer
7    Weather-resistant hard coat
8    Weather-resistant pressure-sensitive adhesive layer
9    Hard coat
10    Reflective layer

## Claims

1.  A coating material for formation of a light-diffusing layer of a projection screen, comprising:

    100 parts by mass of a polyfunctional (meth)acrylate (A); and
    0.1 to 50 parts by mass of fine rare-earth phosphate particles (B).

2.  The coating material according to claim 1, wherein
    the (A) polyfunctional (meth)acrylate contains a polyfunctional poly(meth)acrylate (A1).

3.  The coating material according to claim 2, wherein the (A1) polyfunctional poly(meth)acrylate contains a polyurethane (meth)acrylate having two or more (meth)acryloyl groups in one molecule.

4.  The coating material according to claim 2 or 3, wherein
    a mass average molecular weight of the (A1) polyfunctional poly(meth)acrylate, calculated from a differential molecular weight distribution curve measured by gel permeation chromatography is 1000 or more in terms of polystyrene.

5.  The coating material according to any one of claims 1 to 4, further comprising:
    1 to 30 parts by mass of a silane-coupling agent (C) with respect to 100 parts by mass of the (B) fine rare-earth phosphate particles.

6.  The coating material according to any one of claims 1 to 5, further comprising:
    1 to 30 parts by mass of a compound (D) having an isocyanate group and a polymerizable functional group excluding an isocyanate group with respect to 100 parts by mass of the (B) fine rare-earth phosphate particles.

7. The coating material according to claim 6, wherein the polymerizable functional group excluding the isocyanate group of the compound (D) is at least one selected from the group consisting of a (meth)acryloyl group, a vinyl group, an epoxy group, an amino group, and a mercapto group.

8. A film for projection screen, comprising
a light-diffusing layer formed by using the coating material according to any one of claims 1 to 7.

9. The film for projection screen according to claim 8, comprising the light-diffusing layer on at least one side of a film substrate layer,
wherein the film satisfies the following properties (i) to (iii):

   (i) a total light transmittance of 85% or more;
   (ii) a haze of 30% or less; and
   (iii) a diffusivity of 2% or more.

10. A projection screen, comprising
the film for projection screen according to claim 8 or 9.

11. A projection screen, comprising
a light-diffusing layer formed by using the coating material according to any one of claims 1 to 7.

12. A method for producing a film for projection screen,
the method comprising the steps of:

   (1) mixing and stirring 100 parts by mass of fine rare-earth phosphate particles (B), 1 to 30 parts by mass of a silane-coupling agent (C), and 500 to 2000 parts by mass of a solvent (E) thereby obtaining a first mixture;
   (2) further adding a compound (D) having an isocyanate group and a polymerizable functional group excluding an isocyanate group into the first mixture obtained in the step (1) so that the compound (D) is in an amount of 1 to 30 parts by mass with respect to 100 parts by mass of the (B) fine rare-earth phosphate particles, and performing mixing and stirring of the mixture of the compound (D) and the first mixture thereby obtaining a second mixture;
   (3) further adding a polyfunctional (meth)acrylate (A) into the second mixture obtained in the step (2), and performing mixing and stirring of the mixture of the (A) polyfunctional (meth)acrylate and the second mixture thereby obtaining a coating material containing 100 parts by mass of the (A) polyfunctional (meth)acrylate and 0.1 to 50 parts by mass of the (B) fine rare-earth phosphate particles; and
   (4) forming a light-diffusing layer on at least one side of a film substrate by using the coating material obtained in the step (3).

**Patentansprüche**

1. Beschichtungsmaterial für die Ausbildung einer lichtstreuenden Schicht einer Bildwand, umfassend:

   100 Masseteilen eines polyfunktionellen (Meth)acrylats (A) und
   0,1 bis 50 Masseteilen feiner Seltenerdphosphatpartikel (B).

2. Beschichtungsmaterial nach Anspruch 1, wobei
das polyfunktionelle (Meth)acrylat (A) ein polyfunktionelles Poly(meth)acrylat (A1) enthält.

3. Beschichtungsmaterial nach Anspruch 2, wobei das (A1) polyfunktionelle Poly(meth)acrylat ein Polyurethan(meth)acrylat mit zwei oder mehr (Meth)acryloylgruppen in einem Molekül enthält.

4. Beschichtungsmaterial nach Anspruch 2 oder 3, wobei
ein Massenmittel des Molekulargewichts des (A1) polyfunktionellen Poly(meth)acrylats, berechnet aus einer durch Gelpermeationschromatographie gemessenen Differentialmolekulargewichtsverteilungskurve, 1000 oder mehr in Bezug auf Polystyrol beträgt.

5. Beschichtungsmaterial nach einem der Ansprüche 1 bis 4, das ferner umfasst:
1 bis 30 Masseteile eines Silan-Haftvermittlers (C) bezogen auf 100 Masseteile der (B) feinen Seltenerdphosphatpartikel.

6. Beschichtungsmaterial nach einem der Ansprüche 1 bis 5, das ferner umfasst:
1 bis 30 Masseteile einer Verbindung (D) mit einer Isocyanatgruppe und einer polymerisierbaren funktionellen Gruppe, ausgenommen einer Isocyanatgruppe, bezogen auf 100 Masseteile der (B) feinen Seltenerdphosphatpartikel.

7. Beschichtungsmaterial nach Anspruch 6, wobei die polymerisierbare funktionelle Gruppe, ausgenommen die Isocyanatgruppe der Verbindung (D), wenigstens eine ist, die aus der Gruppe ausgewählt ist, bestehend aus einer (Meth)acryloylgruppe, einer Vinylgruppe, einer Epoxygruppe, einer Aminogruppe und einer Mercaptogruppe.

8. Folie für eine Bildwand, umfassend:
eine lichtstreuende Schicht, die unter Verwendung des Beschichtungsmaterials nach einem der Ansprüche 1 bis 7 ausgebildet ist.

9. Folie für eine Bildwand, der die lichtstreuende Schicht auf wenigstens einer Seite einer Foliensubstratschicht umfasst,
wobei die Folie die folgenden Eigenschaften (i) bis (iii) erfüllt:

(i) eine Gesamtlichtdurchlässigkeit von 85 % oder mehr;
(ii) eine Trübung von 30 % oder weniger; und
(iii) eine Diffusionsfähigkeit von 2 % oder mehr.

10. Bildwand, umfassend:
die Folie für eine Bildwand nach Anspruch 8 oder 9.

11. Bildwand, umfassend
eine lichtstreuende Schicht, die unter Verwendung des Beschichtungsmaterials nach einem der Ansprüche 1 bis 7 ausgebildet ist.

12. Verfahren zum Herstellen einer Folie für eine Bildwand,
wobei das Verfahren die Schritte umfasst:

(1) Mischen und Rühren von 100 Masseteilen feiner Seltenerdphosphatpartikel (B), 1 bis 30 Masseteilen eines Silan-Haftvermittlers (C) und 500 bis 2000 Masseteilen eines Lösungsmittels (E), wodurch eine erste Mischung erhalten wird;
(2) weiteres Hinzufügen einer Verbindung (D) mit einer Isocyanatgruppe und einer polymerisierbaren funktionellen Gruppe, ausgenommen einer Isocyanatgruppe, zu der in Schritt (1) erhaltenen ersten Mischung, sodass die Verbindung (D) in einer Menge von 1 bis 30 Masseteilen bezogen auf 100 Masseteile der (B) feinen Seltenerdphosphatpartikel vorliegt, und Durchführen des Mischens und Rührens der Mischung aus der Verbindung (D) und der ersten Mischung, wodurch eine zweite Mischung erhalten wird;
(3) weiteres Hinzufügen eines polyfunktionellen (Meth)acrylats (A) zu der in Schritt (2) erhaltenen zweiten Mischung und Durchführen des Mischens und des Rührens der Mischung aus dem polyfunktionellen (Meth) acrylat (A) und der zweiten Mischung, wodurch ein Beschichtungsmaterial erhalten wird, das 100 Masseteile des (A) polyfunktionellen (Meth)acrylats und 0,1 bis 50 Masseteile der (B) feinen Seltenerdphosphatpartikel enthält; und
(4) Ausbilden einer lichtstreuenden Schicht auf wenigstens einer Seite eines Foliensubstrats unter Verwendung des in Schritt (3) erhaltenen Beschichtungsmaterials.

**Revendications**

1. Matériau de revêtement pour la formation d'une couche de diffusion de lumière d'un écran de projection, comprenant :

100 parties en masse d'un (méth)acrylate polyfonctionnel (A), et
0,1 à 50 parties en masse de fines particules de phosphate de terres rares (B).

2. Matériau de revêtement selon la revendication 1, dans lequel

le (méth)acrylate polyfonctionnel (A) contient un poly(méth)acrylate polyfonctionnel (A1).

3. Matériau de revêtement selon la revendication 2, dans lequel le poly(méth)acrylate polyfonctionnel (A1) contient un (méth)acrylate de polyuréthane ayant au moins deux groupes (méth)acryloyle dans une molécule.

4. Matériau de revêtement selon la revendication 2 ou 3, dans lequel
le poids moléculaire moyen en masse du poly(méth)acrylate polyfonctionnel (A1), calculé à partir d'une courbe de distribution différentielle du poids moléculaire établie par chromatographie par perméation de gel, est supérieur ou égal à 1000 en ce qui concerne le polystyrène.

5. Matériau de revêtement selon l'une quelconque des revendications 1 à 4, comprenant en outre :
1 à 30 parties en masse d'un agent de couplage silane (C) pour 100 parties en masse des fines particules de phosphate de terres rares (B).

6. Matériau de revêtement selon l'une quelconque des revendications 1 à 5, comprenant en outre :
1 à 30 parties en masse d'un composé (D) comportant un groupe isocyanate et un groupe fonctionnel polymérisable autre qu'un groupe isocyanate par rapport à 100 parties en masse des fines particules de phosphate de terres rares (B).

7. Matériau de revêtement selon la revendication 6, dans lequel le groupe fonctionnel polymérisable autre que le groupe isocyanate du composé (D) est au moins un groupe choisi parmi le groupe (méth)acryloyle, le groupe vinyle, le groupe époxy, le groupe amino et le groupe mercapto.

8. Film pour écran de projection, comprenant
une couche de diffusion de lumière formée au moyen du matériau de revêtement selon l'une quelconque des revendications 1 à 7.

9. Film pour écran de projection selon la revendication 8, comprenant la couche de diffusion de lumière sur au moins une face d'une couche de substrat de film,
le film satisfaisant aux propriétés (i) à (iii) suivantes :

(i) un facteur de transmission lumineuse totale supérieur ou égal à 85 %,
(ii) un voile inférieur ou égal à 30 %, et
(iii) une diffusivité supérieure ou égale à 2 %.

10. Écran de projection, comprenant
le film pour écran de projection selon la revendication 8 ou 9.

11. Écran de projection, comprenant
une couche de diffusion de lumière formée au moyen du matériau de revêtement selon l'une quelconque des revendications 1 à 7.

12. Procédé de fabrication d'un film pour écran de projection,
le procédé comprenant les étapes consistant à :

(1) mélanger et agiter 100 parties en masse de fines particules de phosphate de terres rares (B), 1 à 30 parties en masse d'un agent de couplage silane (C) et 500 à 2000 parties en masse d'un solvant (E) pour ainsi obtenir un premier mélange,
(2) ajouter ensuite un composé (D) ayant un groupe isocyanate et un groupe fonctionnel polymérisable autre qu'un groupe isocyanate au premier mélange obtenu à l'étape (1) de façon que le composé (D) y soit présent en une quantité de 1 à 30 parties en masse par rapport à 100 parties en masse des fines particules de phosphate de terres rares (B), et réaliser le mélange et l'agitation du mélange du composé (D) et du premier mélange, pour ainsi obtenir un deuxième mélange,
(3) ajouter ensuite un (méth)acrylate polyfonctionnel (A) au deuxième mélange obtenu à l'étape (2), et réaliser le mélange et l'agitation du mélange du (méth)acrylate polyfonctionnel (A) et du deuxième mélange, pour ainsi obtenir un matériau de revêtement contenant 100 parties en masse du (méth)acrylate polyfonctionnel (A) et 0,1 à 50 parties en masse des fines particules de phosphate de terres rares (B), et
(4) former une couche de diffusion de lumière sur au moins une face d'un substrat de film au moyen du matériau de revêtement obtenu à l'étape (3).

# FIG. 1

# FIG. 2

## FIG. 3

## FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018147042 A
- EP 3309611 A
- JP 2015212800 A
- JP 2017215355 A
- WO 2018025800 A
- JP 2014201495 A

### Non-patent literature cited in the description

- **SADAO MORI**. Size Exclusion Chromatography: High Performance Liquid Chromatography of Polymers. KYORITSU SHUPPAN CO., LTD., 10 December 1991